# EUROPÄISCHE PATENTSCHRIFT

(11) **EP 3 691 940 B1**
(45) Veröffentlichungstag und Bekanntmachung des Hinweises auf die Patenterteilung: **19.07.2023**
(21) Anmeldenummer: 18782347.1
(22) Anmeldetag: 25.09.2018
(51) Int. Cl.: B60T 8/36, F16K 31/06

(54) **VENTILANORDNUNG UND BREMSSYSTEM**
VALVE ARRANGEMENT AND BRAKE SYSTEM
AGENCEMENT DE SOUPAPES ET SYSTÈME DE FREINAGE

(30) Priorität: 06.10.2017 DE 102017217791
(43) Veröffentlichungstag der Anmeldung: 12.08.2020
(73) Patentinhaber: Continental Automotive Technologies GmbH, 30165 Hannover (DE)
(72) Erfinder: BESIER, Marco, 65307 Bad Schwalbach (DE); STAUDER, Peter, 55128 Mainz (DE); JUNGBECKER, Johann, 55576 Badenheim (DE); JÜRGENS, Michael, 61200 Wölfersheim (DE)
(74) Vertreter: Continental Corporation
(86) Internationale Anmeldenummer: PCT/EP2018/075871
(87) Internationale Veröffentlichungsnummer: WO 2019/068501

(56) Entgegenhaltungen:
- EP-A1- 1 486 681
- EP-A2- 1 332 938
- WO-A1-98/39189
- WO-A1-2016/096532
- WO-A1-2017/148968
- DE-A1- 10 051 433

## Beschreibung

Die Erfindung betrifft eine Ventilanordnung mit einer Anzahl von Ventilen sowie ein Bremssystem mit einer solchen Ventilanordnung.

Bekannte Ventilanordnungen werden beispielsweise verwendet, um Bremssysteme von Kraftfahrzeugen zu steuern. Dabei ist es typischerweise erforderlich, eine hohe Verfügbarkeit sicherzustellen. Beispielsweise kann dies dadurch erreicht werden, dass das Bremssystem aus mindestens zwei voneinander unabhängigen elektrischen Energiequellen versorgt wird und außerdem Komponenten, welche von möglichen Ausfällen betroffen sein können, mehrfach ausgeführt sind. Dabei handelt es sich beispielsweise um elektronische Steuerungseinheiten (ECU = Electronic Control Unit) oder Aktuatoren.

WO2017148968 zeigt ein Bremssystem, welches die notwendigen Redundanzen für eine sehr hohe Verfügbarkeit und eine verbesserte Funktonalität besitzt. Das Bremssystem beinhaltet die für eine Redundanz nötige zweite ECU und einen zweiten Druckerzeuger, so dass im Bremssystem zwei unabhängige ECUs und Druckerzeuger vorhanden sind.

DE10051433A1 zeigt einen Magnet für ein Ventil bestehend aus einem Spulenkörper, der auf einer Drahtwicklung montiert ist. Ein Kabel ist mit Anschlüssen verbunden, die mit einer elektronischen Steuerung verbunden sind. Der Magnet hat drei oder mehr Anschlüsse für zwei oder mehr Wicklungen.

Es ist eine Aufgabe der Erfindung, welche Erdindung in dem unabhängigen Anspruch 1 definiert ist, eine Ventilanordnung bereitzustellen, welche im Vergleich zu bekannten Ventilanordnungen alternativ ausgeführt ist, beispielsweise eine höhere Zuverlässigkeit aufweist. Es ist des Weiteren eine Aufgabe der Erfindung, ein Bremssystem bereitzustellen, welches eine solche Ventilanordnung verwendet.

Dies wird erfindungsgemäß durch eine Ventilanordnung und ein Bremssystem gemäß den jeweiligen Hauptansprüchen erreicht. Vorteilhafte Ausgestaltungen können beispielsweise den jeweiligen Unteransprüchen entnommen werden.

Die Erfindung betrifft eine Ventilanordnung. Die Ventilanordnung weist eine Anzahl von Ventilen auf. Derartige Ventile können beispielsweise jeweils dazu verwendet werden, um einen Fluidstrom zu steuern, also beispielsweise zu sperren oder freizugeben.

Die Ventilanordnung weist eine Anzahl von Spulenanordnungen auf, wobei jedem Ventil eine jeweilige Spulenanordnung zum Betätigen des Ventils zugeordnet ist. Mittels der Spulenanordnung kann das Ventil also beispielsweise geöffnet und geschlossen oder auch in Zwischenstellungen geregelt werden. Jede Spulenanordnung weist dabei eine erste Spule und eine zweite Spule auf.

Die Ventilanordnung weist eine erste Steuerungseinheit und eine zweite Steuerungseinheit auf. Die erste Steuerungseinheit ist mit allen ersten Spulen verbunden, um diese anzusteuern. Die zweite Steuerungseinheit ist mit allen zweiten Spulen verbunden, um diese anzusteuern.

Jedes Ventil ist sowohl mit der ersten Spule wie auch mit der zweiten Spule der ihm zugeordneten Spulenanordnung unabhängig voneinander betätigbar.

Mittels der erfindungsgemäßen Ventilanordnung kann eine Sicherheit bei der Betätigung von Ventilen erhöht werden, indem die jeweiligen Ventile durch jeweils zwei Spulen betätigbar sind, welche durch unterschiedliche Steuerungseinheiten angesteuert werden. Bei Ausfall einer Steuerungseinheit oder einer Spule ist das jeweilige Ventil somit immer noch durch die andere Spule betätigbar.

Es sei verstanden, dass mit dem Begriff einer unabhängig voneinander möglichen Betätigung nicht gemeint ist, dass die erste Spule und die zweite Spule sinnvollerweise voneinander abweichende Schaltstellungen des Ventils vorgeben können. Vielmehr ist damit gemeint, dass sowohl die erste Spule wie auch die zweite Spule jeweils für sich das Ventil betätigen können, wobei die jeweils andere Spule dabei typischerweise gleich wirkt oder eben nicht wirkt.

Erfindungsgemäß weist jede erste Spule ein jeweiliges umgebendes erstes Spulengehäuse auf. Weiter erfindungsgemäß weist jede zweite Spule ein jeweiliges umgebendes zweites Spulengehäuse auf. Dadurch können die jeweiligen Spulen abgekapselt werden.

Jedes zweite Spulengehäuse weist erfindungsgemäß einen Konus zur Aufnahme des jeweiligen ersten Spulengehäuses der Spulenanordnung auf. Dies kann auch umgekehrt ausgeführt sein. Dadurch können die Spulengehäuse in vorteilhafter Weise ineinander verpresst werden, so dass eine dichte und zuverlässige Verbindung der Spulengehäuse ermöglicht wird.

Die erste Steuerungseinheit und die zweite Steuerungseinheit können insbesondere redundant zueinander und/oder unabhängig voneinander ausgebildet sein. Dadurch kann die Sicherheit erhöht werden. Eine redundante Auslegung kann beispielsweise bedeuten, dass bei einem Ausfall irgendeiner Komponente der ersten Steuerungseinheit die zweite Steuerungseinheit alle Aufgaben übernehmen kann und umgekehrt. Eine voneinander unabhängige Ausbildung kann beispielsweise bedeuten, dass die Komponenten der ersten Steuerungseinheit getrennt von denjenigen der zweiten Steuerungseinheit angeordnet sind und somit beispielsweise Störungen, welche in einer der Steuerungseinheiten auftreten, von der jeweils anderen Steuerungseinheit ferngehalten werden.

Insbesondere können die ersten Spulen von den zweiten Spulen elektrisch getrennt sein. Dies ermöglicht eine voneinander unabhängige Ansteuerung. Die erste Steuerungseinheit kann insbesondere auch von der zweiten Steuerungseinheit elektrisch getrennt sein. Dadurch können Probleme aufgrund von elektrischem Übersprechen oder anderen Phänomenen vermieden werden.

Die ersten Spulen können beispielsweise mittels Kontaktpins mit einer ersten Platine der ersten Steuerungseinheit verbunden sein. Die zweiten Spulen können beispielsweise mittels Kontaktpins mit einer zweiten Platine der zweiten Steuerungseinheit verbunden sein. Die jeweiligen Spulen können dabei beispielsweise jeweils zweipolig mit der jeweiligen Steuerungseinheit verbunden sein. Alternativ hierzu können sie jedoch beispielsweise auch eine gemeinsame Masse haben, mit welcher die ersten Spulen und die zweiten Spulen jeweils verbunden sind. In diesem Fall kann beispielsweise jede Spule nur mit einem Kontaktpin bzw. einem Anschluss mit der jeweiligen Steuerungseinheit verbunden sein.

Gemäß einer bevorzugten Ausführung weist jede Spulenanordnung eine Dichtung zwischen der jeweiligen ersten Spule und der jeweiligen zweiten Spule auf. Dadurch kann ein Durchtreten von Feuchtigkeit zwischen den Spulen vermieden werden. Sollte beispielsweise eine Spule Probleme mit Feuchtigkeit bekommen, so kann die Dichtung die Feuchtigkeit von der anderen Spule abhalten und damit für deren problemlosen Weiterbetrieb sorgen.

Gemäß einer bevorzugten Ausführung weist jede Spulenanordnung eine Dichtung zwischen der jeweiligen zweiten Spule und der zweiten Steuerungseinheit und/oder der ersten Steuerungseinheit auf. Dadurch kann in einer typischen Anordnung ein Eindringen von Feuchtigkeit in die jeweilige Spulenanordnung verhindert werden.

Gemäß einer bevorzugten Ausführung weist jede Spulenanordnung eine Dichtung zwischen der jeweiligen zweiten Spule und dem Ventil, welchem die Spulenanordnung zugeordnet ist, oder einem Ventildom dieses Ventils auf. Auch damit kann ein Ausbreiten von Feuchtigkeit verhindert und damit ein Ausfallrisiko reduziert werden.

Das erste Spulengehäuse und das zweite Spulengehäuse jeder Spulenanordnung können vorzugsweise überlappen. Dadurch wird ein vorteilhafter Magnetschluss hergestellt. Dies erleichtert die magnetische Ansteuerung.

Bevorzugt sind die ersten Spulen nicht mit der zweiten Steuerungseinheit verbunden. Weiter bevorzugt sind die zweiten Spulen nicht mit der ersten Steuerungseinheit verbunden. Dies kann sich insbesondere auf jeweilige elektrische Verbindungen beziehen. Dadurch kann eine vorteilhafte elektrische Entkopplung erreicht werden, so dass die ersten Spulen und die erste Steuerungseinheit unabhängig von den zweiten Spulen und der zweiten Steuerungseinheit arbeiten können.

Bevorzugt weist die Ventilanordnung eine Mehrzahl von Ventilen auf. Dadurch können mehrere Ventile gleichzeitig gesteuert werden. Jedoch kann die Bedienanordnung alternativ auch nur ein Ventil aufweisen.

Die Erfindung betrifft des Weiteren ein Bremssystem, insbesondere ein Bremssystem für Kraftfahrzeuge. Das Bremssystem weist eine Ventilanordnung gemäß der Erfindung auf. Dabei kann auf alle hierin beschriebenen Ausführungen und Varianten zurückgegriffen werden. Das Bremssystem weist des Weiteren eine Anzahl von Bremszylindern auf, wobei die Ventile der Ventilanordnung zur Steuerung eines Hydraulikstroms von und/oder zu den Bremszylindern verschaltet sind. Ein derartiges Bremssystem ermöglicht die Realisierung der mit Bezug auf die erfindungsgemäße Ventilanordnung beschriebenen Vorteile für ein Bremssystem.

Das Bremssystem kann insbesondere ein By-Wire-Bremssystem sein. Derartige Bremssysteme können beispielsweise verwendet werden, wenn ein Bremsvorgang lediglich durch die Fahrzeugelektronik eingeleitet wird. Eine unmittelbare mechanische Verbindung zwischen einem Bremspedal und der Bremse ist in diesem Fall typischerweise nicht mehr vorgesehen.

Das Bremssystem kann gemäß einer Ausführung einen Pedalsimulator aufweisen, wobei die Ventile der Ventilanordnung zur Steuerung eines Hydraulikstroms von und/oder zu dem Pedalsimulator verschaltet sind. Dadurch kann ein Fahrer eines Fahrzeugs ein Gefühl bekommen, welches demjenigen entspricht, welches bei der Betätigung eines herkömmlichen Bremspedals auftritt. Trotzdem tritt der Fahrer nur gegen einen Pedalsimulator, welcher eine Bremskraftanforderung des Fahrers an eine Steuerungselektronik weitergibt, wobei die Steuerungselektronik dann für die Erzeugung der Bremskraft sorgt.

Weitere Merkmale und Vorteile wird der Fachmann dem beiliegend mit Bezug auf die beigefügte Zeichnung beschriebenen Ausführungsbeispiel entnehmen. Dabei zeigen:
- Fig. 1:: einen Teil einer Ventilanordnung,
- Fig. 2:: einen anderen Teil der Ventilanordnung,
- Fig. 3:: einen anderen Teil der Ventilanordnung,
- Fig. 4:: einen Teil der Ventilanordnung in einer Schnittansicht,
- Fig. 5:: eine perspektivische Ansicht der Ventilanordnung,
- Fig. 6:: eine weitere Schnittansicht der Ventilanordnung,
- Fig. 7:: ein Bremssystem,
- Fig. 8:: ein weiteres Bremssystem.

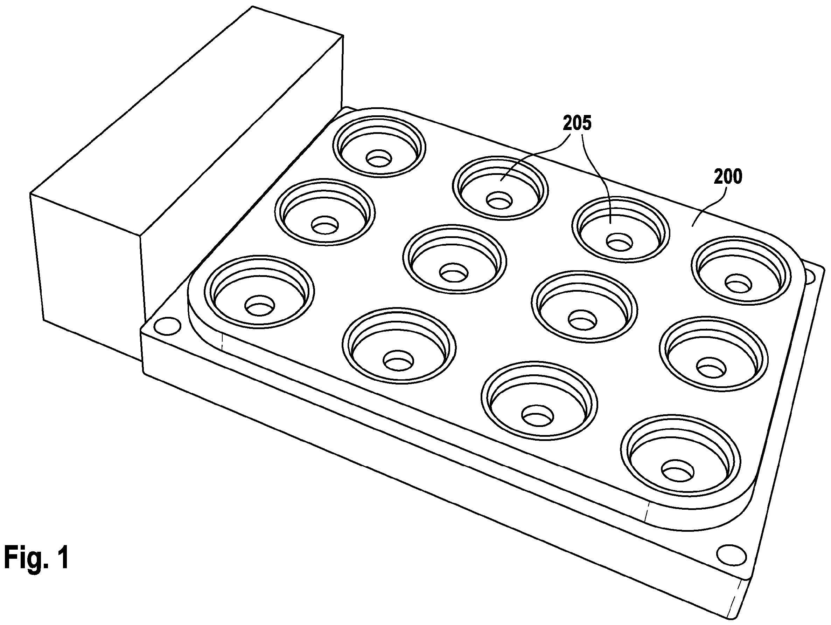

Fig. 1 zeigt einen Teil einer Ventilanordnung gemäß einem Ausführungsbeispiel der Erfindung. Gezeigt ist dabei eine zweite Steuerungseinheit 200 mit darin ausgebildeten Mulden 205 zur Aufnahme von Spulenanordnungen. Wie gezeigt sind insgesamt zwölf derartiger Mulden 205 vorhanden, so dass zwölf Spulenanordnungen aufgenommen werden können und damit zwölf Ventile betätigt werden können.

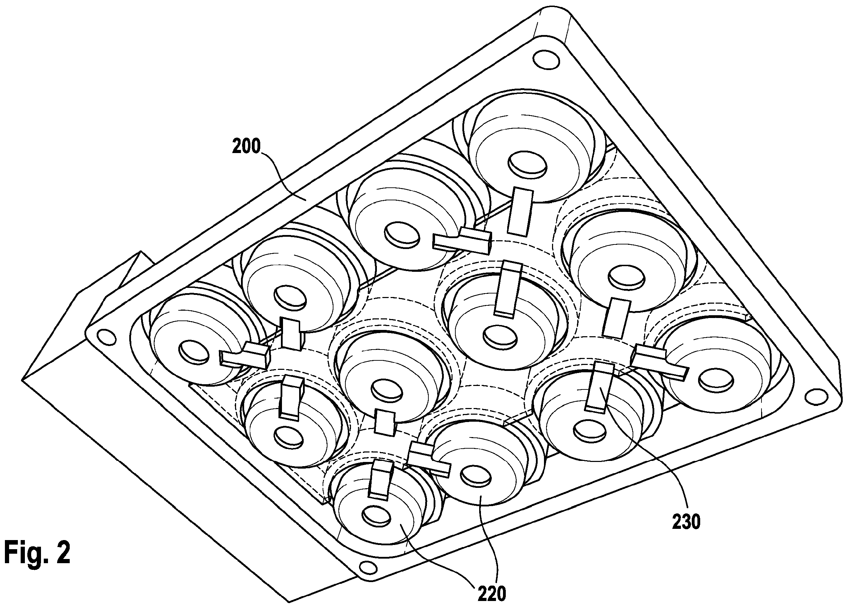

Fig. 2 zeigt die zweite Steuerungseinheit 200 in einer anderen Ansicht, und zwar von unten. Dabei ist zu erkennen, dass in die Mulden 205 jeweilige zweite Spulengehäuse 220 eingesetzt sind, welche jeweilige Spulen aufnehmen, wie noch weiter unten dargestellt werden wird. Außerhalb der zweiten Spulengehäuse 220 sind jeweilige Kontaktpins 230 angeordnet, welche einen Kontakt zwischen der Steuerungseinheit 200 und den im zweiten Spulengehäuse 220 befindlichen Spulen herstellen. Hierauf wird weiter unten noch näher eingegangen werden.

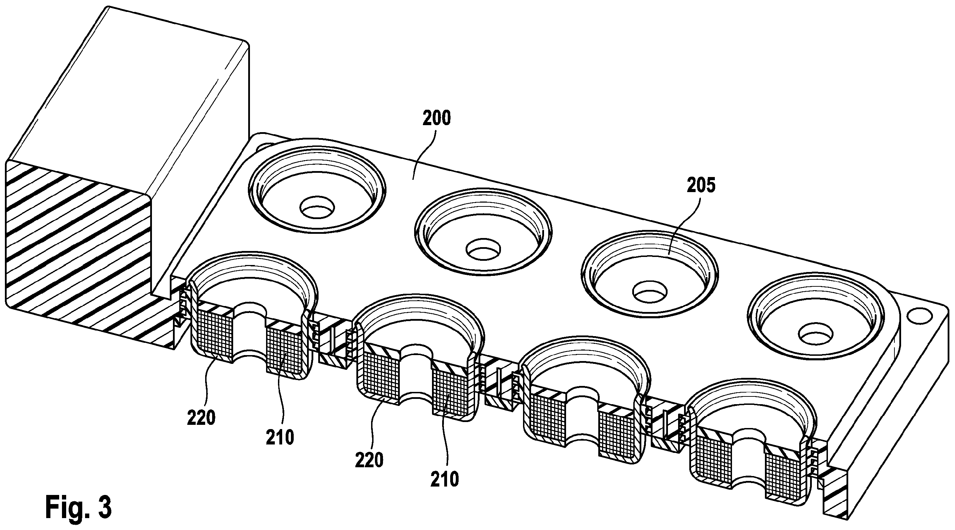

Fig. 3 zeigt die zweite Steuerungseinheit 200 zusammen mit zweiten Spulen 210 und zweiten Spulengehäusen 220 in einer Schnittansicht. Dabei ist zu erkennen, dass die zweiten Spulengehäuse 220 die zweiten Spulen 210 teilweise umschließen. In jeder der Mulden 205 ist jeweils eine zweite Spule 210 angeordnet.

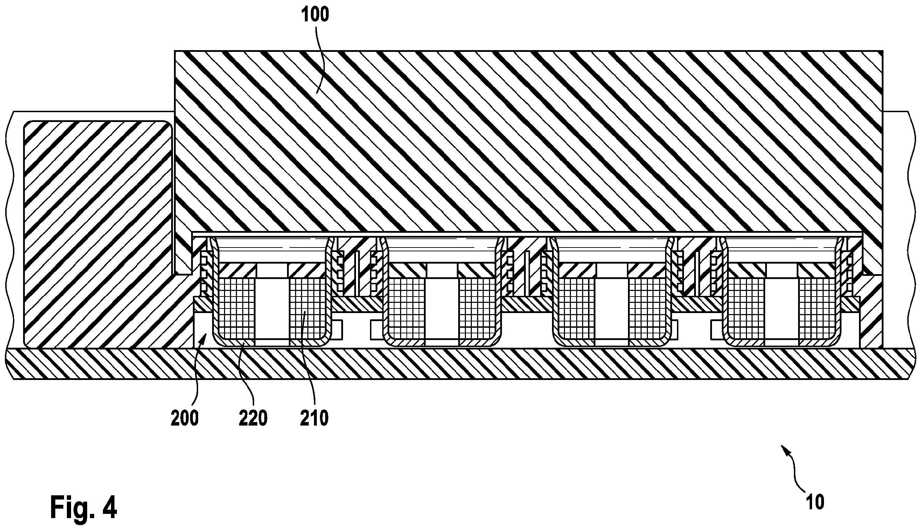

Fig. 4 zeigt eine Ventilanordnung 10 in einer schematischen Ansicht. Dabei ist die bereits erwähnte zweite Steuerungseinheit 200 untenseitig angeordnet, wobei auch die zweiten Spulen 210 und die zweiten Spulengehäuse 220 zu sehen sind. Oberhalb der zweiten Steuerungseinheit 200 ist eine erste Steuerungseinheit 100 angeordnet, welche separat und redundant zur ersten Steuerungseinheit 200 ausgeführt ist. Auf deren Funktionalität wird weiter unten näher eingegangen werden.

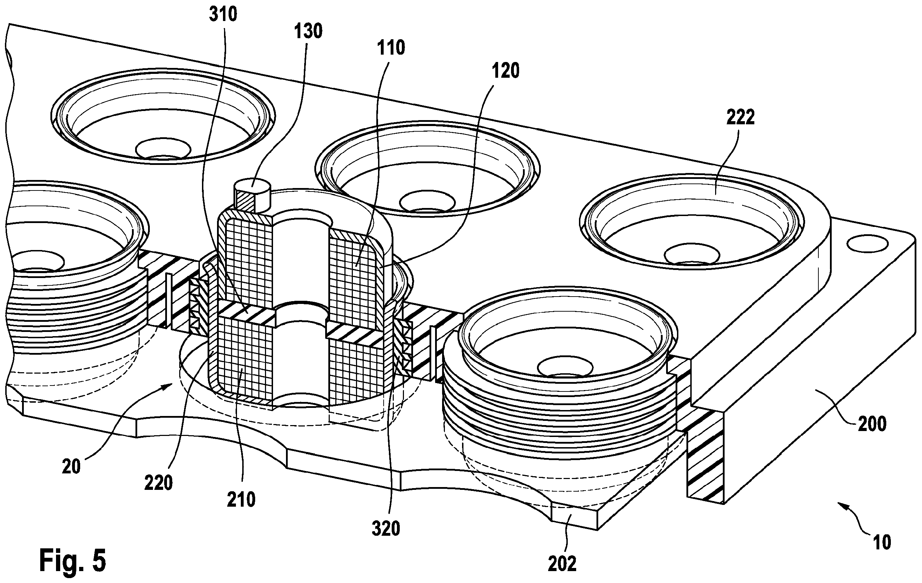

Fig. 5 zeigt die Ventilanordnung 10 in einer perspektivischen Ansicht, welche teilweise geschnitten ist.

Dabei sind zunächst die bereits erwähnte zweite Steuerungseinheit 200 sowie die damit verbundenen zweiten Spulen 210 und deren zweite Spulengehäuse 220 zu erkennen. Die zweite Steuerungseinheit 200 weist eine zweite Platine 202 auf, auf welcher die elektrischen Komponenten der zweiten Steuerungseinheit 200 aufgebracht sind. Diese zweite Platine 202 ist auch mit den zweiten Spulen 210 verbunden.

Des Weiteren ist in Fig. 5 eine erste Spule 110 zu erkennen, welche unmittelbar über der zweiten Spule 210 ausgebildet ist. Die erste Spule 110 ist separat zur zweiten Spule 210 ausgebildet. Sie ist mittels eines Kontaktpins 130 mit einer nicht dargestellten Platine der in Fig. 5 nicht dargestellten ersten Steuerungseinheit 100 verbunden.

Die erste Spule 110 und die zweite Spule 210, welche in Fig. 5 dargestellt sind, bilden zusammen eine Spulenanordnung 20. Jede Spulenanordnung 20 dient zur Betätigung eines nicht dargestellten Ventils.

Dabei kann die erste Spule 110 durch die erste Steuerungseinheit 100 angesteuert werden. Gleichzeitig kann die zweite Spule 210 völlig unabhängig und separat davon von der zweiten Steuerungseinheit 200 angesteuert werden. Dies ermöglicht eine redundante Ausbildung, so dass bei Ausfall der ersten Steuerungseinheit 100 oder der ersten Spule 110 eine Ansteuerung immer noch mittels der zweiten Steuerungseinheit 200 und der zweiten Spule 210 erfolgen kann. Das gleiche gilt in umgekehrter Richtung.

Die Steuerungseinheiten 100, 200 können beispielsweise mit unterschiedlichen Stromversorgungen verbunden sein und können insbesondere elektrisch vollständig voneinander isoliert und getrennt sein.

Die erste Spule 110 ist von einem ersten Spulengehäuse 120 umgeben. Das erste Spulengehäuse 120 schützt die erste Spule 110 nach außen vor mechanischen und anderen Beschädigungen.

Innerhalb der Spulenanordnung 20 ist eine erste Dichtung 310 angeordnet. Diese befindet sich zwischen der ersten Spule 110 und der zweiten Spule 210. Damit wird ein Feuchtigkeitstransport zwischen den beiden Spulen 110, 210 vermieden, so dass für den Fall, dass eine der beiden Spulen 110, 210 aufgrund einer Fehlfunktion mit Feuchtigkeit in Kontakt kommen sollte, die andere Spule 110, 210 dadurch nicht ebenfalls beeinträchtigt wird.

Des Weiteren ist eine zweite Dichtung 320 vorgesehen, welche zwischen der zweiten Spule 210 und der zweiten Steuerungseinheit 200, also der untenliegenden Steuerungseinheit, angeordnet ist. Dies dichtet die Spulenanordnung 20 in besonders vorteilhafter Weise an Stellen ab, welche ansonsten besonders anfällig gegen das Eindringen von Feuchtigkeit wären.

Wie zu erkennen ist, weisen die zweiten Spulengehäuse 220 jeweils einen Konus 222 auf, in welchen das jeweilige erste Spulengehäuse 120 eingesetzt wird. Dies erlaubt einen besonders guten Sitz und eine dichte Verbindung der beiden Spulengehäuse 120, 220.

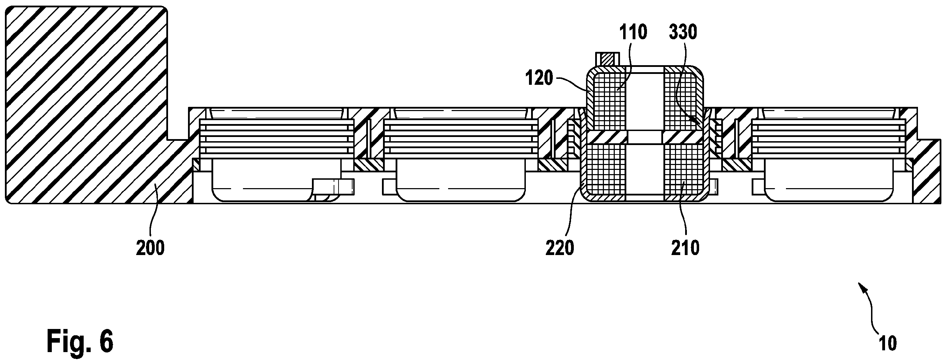

Fig. 6 zeigt eine Schnittansicht der Ventilanordnung 10. Dabei sind die bereits erwähnten Komponenten zumindest teilweise zu erkennen. Des Weiteren ist zu erkennen, dass das erste Spulengehäuse 120 und das zweite Spulengehäuse 220 an einem Überlappbereich 330 überlappen, so dass ein vorteilhaftes Ausbilden eines magnetischen Schlusses ermöglicht wird.

Die Ventilanordnung 10 weist zusätzlich zu den bislang beschriebenen Komponenten insbesondere nicht dargestellte Ventile auf, welche mittels der Spulenanordnungen 20 angesteuert werden können.

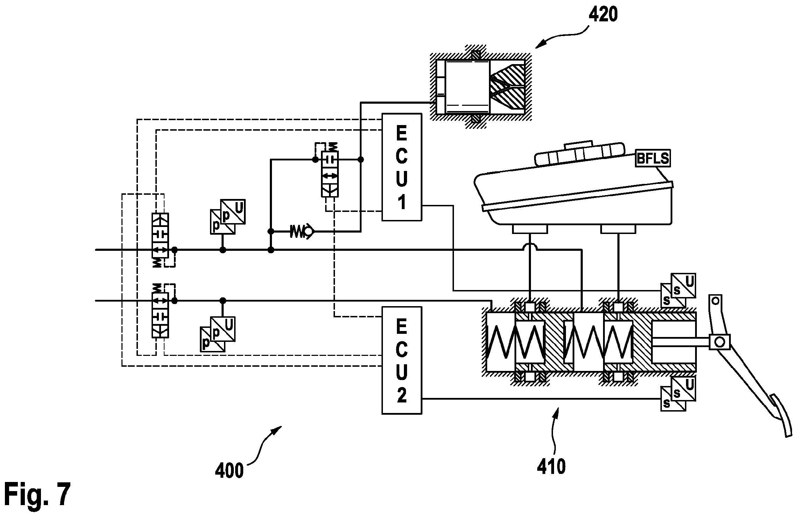

Fig. 7 zeigt eine Bremsanordnung 400 gemäß einem ersten Ausführungsbeispiel. Dabei ist ein Pedalsimulator 420 gezeigt, welcher es ermöglicht, einem Benutzer eines Bremspedals ein Gefühl zu vermitteln, als würde er eine klassische hydraulische Bremse betätigen. In Wirklichkeit wird jedoch die Bewegung des Bremspedals aufgezeichnet und es wird ein entsprechender Bremsvorgang durch elektronische Schaltung von Ventilen ausgelöst. Bei den gezeigten Ventilen kann es sich insbesondere um Ventile handeln, welche Teil einer Ventilanordnung 10 wie weiter oben beschrieben sind.

Des Weiteren ist eine Betätigungseinheit 410 zu sehen, welche mittels der Ventile angesteuert wird und eine Bremswirkung auslöst. Auf die genaue Funktionalität der in Fig. 7 dargestellten Bremsanordnung 400 wird hier nicht näher eingegangen. Diesbezüglich sei auf den Schaltplan verwiesen.

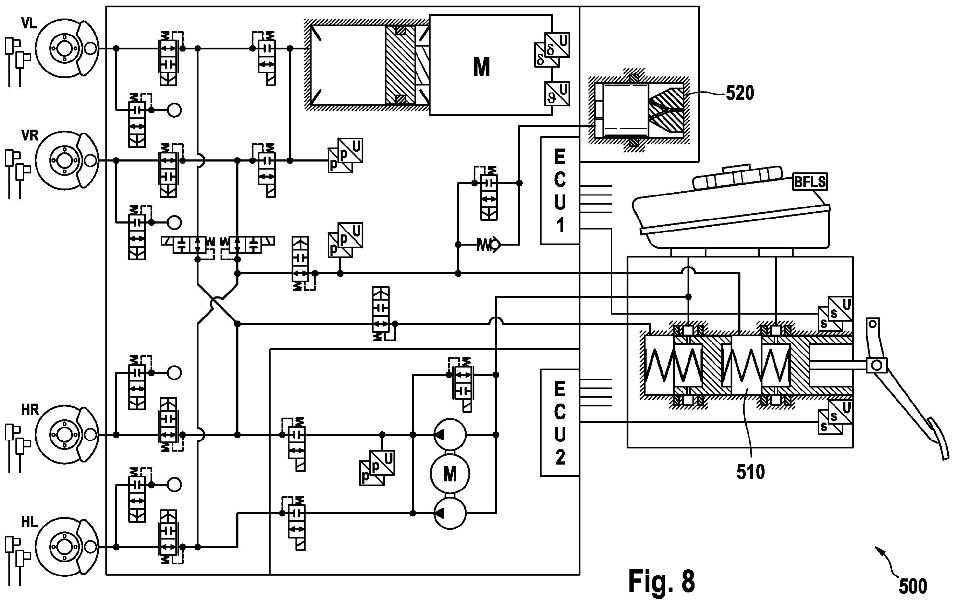

Fig. 8 zeigt eine Bremsanordnung 500 gemäß einem zweiten Ausführungsbeispiel. Auch dabei ist ein Pedalsimulator 520 zu erkennen. Außerdem ist eine Betätigungseinheit 510 zu erkennen. Ebenso sind Ventile zu erkennen, welche insbesondere wie weiter oben mit Bezug auf die Ventilanordnung 10 beschrieben ausgeführt sein können. Ansonsten wird auf die Bremseinheit 500, welche in Fig. 8 gezeigt ist, nicht näher eingegangen.

Bezüglich der Funktionalität der in den Fig. 7 und 8 dargestellten Bremssysteme 400, 500 sei auf die Figuren verwiesen.

Allgemein kann ein Konzept zur Umsetzung einer redundanten Elektromagnetventil-Spulenansteuerung für Bremsregelsysteme beschrieben werden.

Hierzu kann beispielsweise vorgeschlagen werden, eine Spulenansteuerung zur Magnetfelderzeugung für elektromagnetische Ventile derart aufzubauen, dass sie unabhängig von zwei verschiedenen Steuergeräten, üblicherweise elektrischen Kontrolleinheiten, meist Electronic Control Units (ECU) genannt, oder Steuerungseinheiten, angesteuert werden kann und hierbei eine sichere elektrische Trennung aufweist. Ein geteiltes Ventilspulenpaket kann also elektrisch mit beiden ECUs verbunden und somit von beiden ECUs aus elektrisch unabhängig ansteuerbar sein. Dies kann insbesondere bedeuten, dass jede ECU alleine das entsprechende Ventil schalten kann oder auch beide gemeinsam.

Dies wird beispielsweise wie in Fig. 5 dargestellt durch ein geteiltes Ventilspulenpaket für Elektromagnetventile realisiert. Hierbei kann die obere Spule an eine erste und die untere Spule an eine zweite ECU angeschlossen werden. Die Kontaktierung der unteren Spule ist dabei schematisch in Fig. 2 dargestellt. Hierbei können Kontaktpins der Spule mit einer Platine oder einem anderen Kontaktträger verbunden werden. Die obere Spule kann mit der in Fig. 5 schematisch dargestellten Kontaktierung mit der oberen nicht dargestellten Platine der ersten ECU verbunden werden. Zur Gewährleistung einer unabhängigen Funktion der beiden Spulen kann eine Abdichtung vorgesehen sein, welche sicherstellt, dass keine Flüssigkeit oder Feuchtigkeit einen elektrischen Kurzschluss zwischen den beiden Spulen bzw. ECUs verursachen kann. Hierzu kann eine Dichtung außen vorgesehen sein, zwischen dem unteren Spulengehäuse und dem ECU-Gehäuse bzw. Spulenkasten, und eine weitere Dichtung kann innen vorgesehen sein, zwischen dem Gehäuse der unteren Spule und dem Ventil bzw. Ventildom. Zur Montage der oberen ECU bzw. des Spulenkastens bzw. der oberen Spule ist jeweils am Gehäuse der unteren Spule ein Konus vorgesehen.

Damit können Bauteil- bzw. Montagetoleranzen ausgeglichen werden und somit kann eine Montage bzw. ein Einfädeln der oberen Spule in das Gehäuse der unteren Spule gewährleistet werden. Wie in Fig. 6 dargestellt, können sich die Gehäuse der beiden Spulen im montierten Zustand überlappen, wodurch ein gewünschter magnetischer Fluss sichergestellt bzw. erzeugt werden kann.

Ein geteiltes Ventilspulenpaket kann insbesondere auf ein Elektromagnetventil bzw. einen Ventildom aufgesteckt werden. Somit ist das heute übliche Montage- und Tauschkonzept der Komponenten nutzbar. Hierbei kann beispielsweise wie in Fig. 4 dargestellt die obere und die untere ECU bzw. die Spulenkästen als vormontierte Einheit auf einem Hydraulikblock montiert werden, oder es können einzeln zuerst die untere ECU bzw. der untere Spulenkasten und dann die obere montiert bzw. getauscht werden.

Durch diese Ausführung ist es bei Ausfall einer ECU noch möglich, von einer anderen intakten ECU das oder die entsprechend ausgestatteten elektromagnetischen Ventile elektrisch anzusteuern und wunschgemäß zu schalten.

Die doppelte bzw. redundante Ansteuerbarkeit von Elektromagnetventilen ist insbesondere vorteilhaft beim Entwurf und Betrieb von Bremsregelsystemen. Beispielsweise ist es somit möglich, in einer elektrohydraulischen By-Wire-Bremsanlage eine dynamische Rekonfiguration der Bremsanlage im Betrieb vorzunehmen. Das heißt, dass beispielsweise während des Betriebs bei Ausfall einer ECU die andere noch intakte ECU den normalen By-Wire-Betrieb mit normaler By-Wire-Schaltstellung der Elektromagnetventile aufrechterhalten kann.

Somit ergibt sich beispielsweise in einem elektrohydraulischen By-Wire-Bremssystem mit Pedalsimulator auch keine Irritation für den Fahrer durch Beeinflussung der Pedalcharakteristik, da die Betätigungseinheit wie im federlosen normalen By-Wire-Bremsbetrieb mit dem Pedalsimulator hydraulisch verbunden ist.

Beispielhaft dargestellt ist in Fig. 7 ein Ausschnitt eines möglichen By-Wire-Bremssystems im Wesentlichen bestehend aus Betätigung, Elektromagnetventilen und Pedalsimulator. Gezeigt ist die stromlose Schaltstellung der Elektromagnetventile.

Die hierin beschriebene Umsetzung ist insbesondere auch vorteilhaft zur redundanten Ansteuerung von weiteren Elektromagnetventilen im Bremssystem. Somit kann außerdem beispielsweise auch die Raddruckmodulation redundant ansteuerbar gestaltet werden. Hierzu können gemäß dem beschriebenen Konzept auch die Raddruckmodulationsventile redundant angesteuert werden. Dies kann beispielsweise in einem Bremssystem wie in Fig. 8 dargestellt genutzt werden.

Das hierin vorgestellte Konzept zur Umsetzung einer redundanten Elektromagnetventil-Spulenansteuerung für Bremsregelsysteme ermöglicht insbesondere verbesserte und redundante Funktionalitäten von Bremsregelsystemen bzw. Bremssystemen. Dies kann unter anderem wie beispielhaft dargestellt für eine redundante Raddruckmodulation oder eine redundante Fahrertrennventilbeschaltung für eine elektrohydraulische By-Wire-Bremsfunktion genutzt werden.

Das hierin vorgestellte modulare Aufbaukonzept der ECUs ist besonders vorteilhaft, da es eine komplette galvanische Entkopplung der beiden Teil-ECUs realisiert und dabei eine doppelte bzw. redundante Ansteuerbarkeit der Elektromagnetventile in Bremsregelsystemen ermöglicht. Außerdem realisiert das Aufbaukonzept auch eine trennende Abdichtung gegen Feuchtigkeit zwischen den beiden Teil-ECUs. Somit werden eine hohe Betriebssicherheit und ein hoher Level an Redundanz in Bremsregelsystemen erreicht.

Das Konzept ist außerdem kompatibel zu heute bei Bremsregelsystemen üblichen Fertigungs- und Montagetechnologien.

Es sei verstanden, dass die hierin jeweils zweifach beschriebenen Komponenten, also insbesondere Steuerungseinheit und Spulen, grundsätzlich auch dreifach, vierfach oder auch mehrfach ausgeführt sein können. Beispielsweise können drei Steuerungseinheiten vorgesehen sein und es können dementsprechend auch drei Spulen pro Spulenanordnung vorgesehen sein. Die hierin gegebenen Ausführungen gelten entsprechend und sinngemäß.

## Patentansprüche

1. Ventilanordnung (10), aufweisend
- eine Anzahl von Ventilen,
- eine Anzahl von Spulenanordnungen (20), wobei jedem Ventil eine jeweilige Spulenanordnung (20) zum Betätigen des Ventils zugeordnet ist, und wobei jede Spulenanordnung (20) eine erste Spule (110) und eine zweite Spule (210) aufweist,
- eine erste Steuerungseinheit (100), und
- eine zweite Steuerungseinheit (200),
- wobei die erste Steuerungseinheit (100) mit allen ersten Spulen (110) elektrisch verbunden ist, um diese anzusteuern,
- wobei die zweite Steuerungseinheit (200) mit allen zweiten Spulen (210) elektrisch verbunden ist, um diese anzusteuern, und
- wobei jedes Ventil sowohl mit der ersten Spule (110) wie auch mit der zweiten Spule (210) der ihm zugeordneten Spulenanordnung (20) unabhängig voneinander betätigbar ist, wobei jede erste Spule (110) ein jeweiliges umgebendes erstes Spulengehäuse (120) aufweist und
wobei jede zweite Spule (210) ein jeweiliges umgebendes zweites Spulengehäuse (220) aufweist,
**dadurch gekennzeichnet, dass**
jedes zweite Spulengehäuse (220) einen Konus (222) zur Aufnahme des jeweiligen ersten Spulengehäuses (120) der Spulenanordnung (20) aufweist, wobei das erste Spulengehäuse (120) und das zweite Spulengehäuse (220) jeder Spulenanordnung (20) überlappen.

2. Ventilanordnung (10) nach Anspruch 1,
- wobei die erste Steuerungseinheit (100) und die zweite Steuerungseinheit (200) redundant zueinander und/oder unabhängig voneinander ausgebildet sind.

3. Ventilanordnung (10) nach einem der vorhergehenden Ansprüche,
- wobei die ersten Spulen (110) von den zweiten Spulen (210) elektrisch getrennt sind,
und/oder
- wobei die erste Steuerungseinheit (100) von der zweiten Steuerungseinheit (200) elektrisch getrennt ist.

4. Ventilanordnung (10) nach einem der vorhergehenden Ansprüche,
- wobei die ersten Spulen (110) mittels Kontaktpins (130) mit einer ersten Platine der ersten Steuerungseinheit (100) verbunden sind,
und/oder
- wobei die zweiten Spulen (210) mittels Kontaktpins (230) mit einer zweiten Platine (202) der zweiten Steuerungseinheit (200) verbunden sind.

5. Ventilanordnung (10) nach einem der vorhergehenden Ansprüche,
- wobei jede Spulenanordnung (20) eine erste Dichtung (310) zwischen der jeweiligen ersten Spule (110) und der jeweiligen zweiten Spule (210) aufweist.

6. Ventilanordnung (10) nach einem der vorhergehenden Ansprüche,
- wobei jede Spulenanordnung (20) eine zweite Dichtung (320) zwischen der jeweiligen zweiten Spule (210) und der zweiten Steuerungseinheit (200) und/oder der ersten Steuerungseinheit (100) aufweist.

7. Ventilanordnung (10) nach einem der vorhergehenden Ansprüche,
- wobei jede Spulenanordnung (20) eine zweite Dichtung (320) zwischen der jeweiligen zweiten Spule (210) und dem Ventil, welchem die Spulenanordnung (20) zugeordnet ist, oder einem Ventildom dieses Ventils, aufweist.

8. Ventilanordnung (10) nach einem der vorhergehenden Ansprüche,
- wobei die ersten Spulen (110) nicht elektrisch mit der zweiten Steuerungseinheit (200) verbunden sind,
und/oder
- wobei die zweiten Spulen (210) nicht elektrisch mit der ersten Steuerungseinheit (100) verbunden sind.

9. Ventilanordnung (10) nach einem der vorhergehenden Ansprüche,
- wobei die Ventilanordnung (10) eine Mehrzahl von Ventilen aufweist.

10. Bremssystem (400, 500), aufweisend
- eine Ventilanordnung (10) nach einem der vorhergehenden Ansprüche, und
- eine Anzahl von Bremszylindern,
- wobei die Ventile der Ventilanordnung (10) zur Steuerung eines Hydraulikstroms von und/oder zu den Bremszylindern verschaltet sind.

11. Bremssystem (400, 500) nach Anspruch 10,
- wobei das Bremssystem (400, 500) ein by-wire-Bremssystem ist.

12. Bremssystem (400, 500) nach Anspruch 10,
- welches ferner einen Pedalsimulator (420, 520) aufweist,
- wobei die Ventile der Ventilanordnung (10) zur Steuerung eines Hydraulikstroms von und/oder zu dem Pedalsimulator (420, 520) verschaltet sind.

## Claims

1. Valve arrangement (10) having
- a number of valves,
- a number of coil arrangements (20), wherein each valve is assigned a respective coil arrangement (20) for actuating the valve, and wherein each coil arrangement (20) has a first coil (110) and a second coil (210),
- a first control unit (100), and
- a second control unit (200),
- wherein the first control unit (100) is electrically connected to all the first coils (110) in order to actuate them,
- wherein the second control unit (200) is electrically connected to all the second coils (210) in order to actuate them, and
- wherein each valve is actuatable both by the first coil (110) and by the second coil (210) of the coil arrangement (20) assigned thereto in a mutually independent manner,
wherein each first coil (110) has a respective surrounding first coil housing (120), and
wherein each second coil (210) has a respective surrounding second coil housing (220),
**characterized in that**
each second coil housing (220) has a cone (222) for receiving the respective first coil housing (120) of the coil arrangement (20), wherein the first coil housing (120) and the second coil housing (220) of each coil arrangement (20) overlap.

2. Valve arrangement (10) according to Claim 1,
- wherein the first control unit (100) and the second control unit (200) are configured in a mutually redundant and/or mutually independent manner.

3. Valve arrangement (10) according to either of the preceding claims,
- wherein the first coils (110) are electrically isolated from the second coils (210), and/or
- wherein the first control unit (100) is electrically isolated from the second control unit (200).

4. Valve arrangement (10) according to one of the preceding claims,
- wherein the first coils (110) are connected by means of contact pins (130) to a first circuit board of the first control unit (100),
and/or
- wherein the second coils (210) are connected by means of contact pins (230) to a second circuit board (202) of the second control unit (200).

5. Valve arrangement (10) according to one of the preceding claims,
- wherein each coil arrangement (20) has a first seal (310) between the respective first coil (110) and the respective second coil (210).

6. Valve arrangement (10) according to one of the preceding claims,
- wherein each coil arrangement (20) has a second seal (320) between the respective second coil (210) and the second control unit (200) and/or the first control unit (100).

7. Valve arrangement (10) according to one of the preceding claims,
- wherein each coil arrangement (20) has a second seal (320) between the respective second coil (210) and the valve assigned the coil arrangement (20), or a valve dome of said valve.

8. Valve arrangement (10) according to one of the preceding claims,
- wherein the first coils (110) are not electrically connected to the second control unit (200),
and/or
- wherein the second coils (210) are not electrically connected to the first control unit (100).

9. Valve arrangement (10) according to one of the preceding claims,
- wherein the valve arrangement (10) has a plurality of valves.

10. Brake system (400, 500) having
- a valve arrangement (10) according to one of the preceding claims, and
- a number of brake cylinders,
- wherein the valves of the valve arrangement (10) are connected for controlling a hydraulic flow from and/or to the brake cylinders.

11. Brake system (400, 500) according to Claim 10,
- wherein the brake system (400, 500) is a by-wire brake system.

12. Brake system (400, 500) according to Claim 10,
- said brake system furthermore having a pedal simulator (420, 520),
- wherein the valves of the valve arrangement (10) are connected for controlling a hydraulic flow from and/or to the pedal simulator (420, 520).

## Revendications

1. Agencement de soupapes (10), présentant
- un nombre de soupapes,
- un nombre d'agencements de bobines (20), un agencement de bobines (20) respectif étant associé à chaque soupape pour l'actionnement de la soupape, et chaque agencement de bobines (20) présentant une première bobine (110) et une deuxième bobine (210),
- une première unité de commande (100), et
- une deuxième unité de commande (200),
- la première unité de commande (100) étant connectée électriquement à toutes les premières bobines (110), afin de commander celles-ci,
- la deuxième unité de commande (200) étant connectée électriquement à toutes les deuxièmes bobines (210), afin de commander celles-ci, et
- chaque soupape pouvant être actionnée à la fois à l'aide de la première bobine (110) et à l'aide de la deuxième bobine (210) de l'agencement de bobines (20) associé à celle-ci, indépendamment l'une de l'autre,
chaque première bobine (110) présentant un premier boîtier de bobine (120) environnant respectif et
chaque deuxième bobine (210) présentant un deuxième boîtier de bobine (220) environnant respectif,
**caractérisé en ce que**
chaque deuxième boîtier de bobine (220) présente un cône (222) servant à la réception du premier boîtier de bobine (120) respectif de l'agencement de bobines (20), le premier boîtier de bobine (120) et le deuxième boîtier de bobine (220) de chaque agencement de bobines (20) se chevauchant.

2. Agencement de soupapes (10) selon la revendication 1,
- la première unité de commande (100) et la deuxième unité de commande (200) étant réalisées de manière redondante l'une par rapport à l'autre et/ou indépendamment l'une de l'autre.

3. Agencement de soupapes (10) selon l'une des revendications précédentes,
- la première bobine (110) étant séparée électriquement de la deuxième bobine (210),
et/ou
- la première unité de commande (100) étant séparée électriquement de la deuxième unité de commande (200).

4. Agencement de soupapes (10) selon l'une des revendications précédentes,
- la première bobine (110) étant reliée, au moyen de broches de contact (130), à une première carte de circuits imprimés de la première unité de commande (100),
et/ou
- la deuxième bobine (210) étant reliée, au moyen de broches de contact (230), à une deuxième carte de circuits imprimés (202) de la deuxième unité de commande (200).

5. Agencement de soupapes (10) selon l'une des revendications précédentes,
- chaque agencement de bobines (20) présentant un premier joint d'étanchéité (310) entre la première bobine (110) respective et la deuxième bobine (210) respective.

6. Agencement de soupapes (10) selon l'une des revendications précédentes,
- chaque agencement de bobines (20) présentant un deuxième joint d'étanchéité (320) entre la deuxième bobine (210) respective et la deuxième unité de commande (200) et/ou la première unité de commande (100).

7. Agencement de soupapes (10) selon l'une des revendications précédentes,
- chaque agencement de bobines (20) présentant un deuxième joint d'étanchéité (320) entre la deuxième bobine (210) respective et la soupape, à laquelle l'agencement de bobines (20) est associé, ou un dôme de cette soupape.

8. Agencement de soupapes (10) selon l'une des revendications précédentes,
- la première bobine (110) n'étant pas connectée électriquement à la deuxième unité de commande (200),
et/ou
- la deuxième bobine (210) n'étant pas connectée électriquement à la première unité de commande (100).

9. Agencement de soupapes (10) selon l'une des revendications précédentes,
- l'agencement de soupapes (10) présentant une pluralité de soupapes.

10. Système de freinage (400, 500), présentant
- un agencement de soupapes (10) selon l'une des revendications précédentes, et
- un nombre de cylindres de frein,
- les soupapes de l'agencement de soupapes (10) étant connectées à partir des cylindres de frein et/ou vers ceux-ci pour la commande d'un flux hydraulique.

11. Système de freinage (400, 500) selon la revendication 10,
- le système de freinage (400, 500) étant un système de freinage à commande électrique (« by-wire »).

12. Système de freinage (400, 500) selon la revendication 10,
- lequel présente en outre un simulateur de pédale (420, 520),
- les soupapes de l'agencement de soupapes (10) étant connectées à partir du simulateur de pédale (420, 520) et/ou vers celui-ci pour la commande d'un flux hydraulique.
